# EUROPEAN PATENT SPECIFICATION

(11) **EP 1 662 902 B1**
(45) Date of publication and mention of the grant of the patent: **14.03.2007**
(21) Application number: 04764342.4
(22) Date of filing: 20.08.2004
(51) Int. Cl.: A23L 1/29, A23L 1/035, A23L 1/304, A23C 9/13

(54) **FOOD COMPOSITION**
NAHRUNGSMITTELZUSAMMENSETZUNG
PRODUIT ALIMENTAIRE

(30) Priority: 10.09.2003 EP 03255641
(43) Date of publication of application: 07.06.2006
(73) Proprietor: UNILEVER N.V., 3013 AL Rotterdam (NL); UNILEVER PLC, London EC4P 4BQ (GB)
(72) Inventor: BANKEN, H.T.K.M., Unilever R & D Vlaardingen, NL-3133 AT Vlaardingen (NL); DUNN, M., The International Foods Network Ltd., Reading Berkshire RG6 6BZ (GB); PALMER, A.E., UBF Foodsolutions, R & D, Lisle, IL 60532 (US); POVEY, Kevin John, Slimfast Foods Ltd, Slough Berkshire SL3 9JT (GB); SALMON, Peter M., International Foods Network Ltd, R eading Berkshire RG6 6BZ (GB)
(74) Representative: Wurfbain, Gilles L.
(86) International application number: PCT/EP2004/009359
(87) International publication number: WO 2005/023018

(56) References cited:
- EP-A- 0 626 177
- WO-A-94/15486
- US-A- 5 385 748
- US-B1- 6 228 886
- US-B1- 6 245 803
- US-B1- 6 436 464
- DATABASE WPI Section Ch, Week 198129 Derwent Publications Ltd., London, GB; Class A97, AN 1981-52679D XP002269670 & JP 56 065622 A (SAN-EI CHEM IND LTD) 3 June 1981 (1981-06-03)
- DATABASE WPI Section Ch, Week 200257 Derwent Publications Ltd., London, GB; Class D13, AN 2002-529504 XP002269671 & CN 1 183 906 A (YANG D) 10 June 1998 (1998-06-10)
- "Der kleine "Souci-Fachmann-Kraut"" 1991, WISSENSCHAFTLICHE VERLAGSGESELLSCHAFT MBH , STUTTGART , XP002269669 page 16

## Description

### Field of the invention

The present invention relates to edible compositions comprising fat and transition metals, divalent metals and/or their compounds. The compositions have good organoleptic stability and physical stability upon storage.

### Background of the Invention

The incidence of obesity and the number of people considered overweight in countries where a so-called Western diet is adopted has drastically increased over the last decade. Since obesity and being overweight are generally known to be associated with a variety of diseases such as heart disease, hypertension, type 2 diabetes and arthereosclerosis, this increase is a major health concern for the medical world and for individuals alike. Furthermore, being overweight is considered by the majority of the Western population as unattractive.

This has led to an increasing interest by consumers in their health and has created a demand for products that help to reduce or control daily caloric intake and/or control body weight and/or bodily appearance. Several solutions have been proposed to help individuals to control their weight. Among these solutions is the use of drugs e.g. to suppress the activity of enzymes in the digestive system. However the use of drugs is often not preferred unless strictly required for medical purposes.

Another proposed solution to the problem of being overweight is to prescribe the individuals concerned a specific diet, for example, a diet with a restricted caloric intake per day. A problem with these diets is that often they do not provide a healthy nutritional balance and/or they are difficult to accommodate in modern lifestyles.

Meal replacer products have also been proposed as part of a healthy diet in order to control or reduce body weight. For example, US 5,688,547 discloses a nutritional meal replacement composition comprising dietary fibre, protein, a cellulose gum and gel.

These meal replacer products are generally products that are intended to be consumed as a single-serving food product, such as a bar or a drink etc to replace one or two meals per day.
The meal replacer products are designed such that on the one hand they provide a restricted caloric intake, but on the other hand they provide a healthy balance of nutritional ingredients and are convenient to incorporate into an individual's daily diet.

In order to provide a healthy balance of nutritional ingredients food products may be fortified with micronutrients such as transition metals and their compounds. This is especially true for food products which are intended to be used in a weight loss or weight maintenance plan where the subject consuming the food may be eating a calorie restricted and potentially nutritionally restricted diet (see for example US 5,688,547).

However, a general problem with micronutrient fortified food products (especially those intended to be used in a weight loss or weight maintenance plan such as meal replacer products or low-calorie snacks) is that whilst the addition of transition metals and their compounds provides nutritional benefits to the subject consuming the product, the organoleptic properties and/or stability, including physical stability, of the product or the ingredients used therein can be adversely affected.

In particular, the organoleptic properties of the product can be adversely affected upon storage resulting in a deterioration in one or more of product taste, mouthfeel or texture. These stability problems can manifest themselves in several ways; the products may change colour with time and/or may exhibit some degree of physical instability such as phase separation (e.g. separation of an oil phase) and/or may exhibit some degree of chemical instability of one or more ingredients (e.g. oxidation of oxidation sensitive ingredients such as certain fats).

In the presence of transition metals and their compounds, the organoleptic properties, colour stability and chemical stability in particular of the food product can be adversely affected.

The above-mentioned problems are generally made more acute when the edible composition comprises fat. For example, many fats are susceptible to oxidation because they are not very chemically stable and this can lead to off flavour development in the product with time. This is particularly noticeable when the edible composition comprises an unsaturated fat, such as sunflower oil. However, such ingredients are desirably included to give a beneficial nutritional profile to the composition.

This deterioration of organoleptic properties and/or stability upon storage is/are especially problematic upon prolonged storage at elevated temperatures (e.g. 30°C for 4 weeks), or, when the edible composition is subjected to a heat treatment step during preparation (e.g. a pasteurisation or other sterilisation step) which may be used to prepare an ambient stable food product.

Also, the problems of providing good mouthfeel of the composition are especially pertinent to compositions that comprise relatively low levels of fat in order to control the levels of calories provided by fat. Such products may be so-called 'low-fat' versions of full fat products. Consumers typically desire the mouthfeel that a higher fat product provides but without the levels of fat associated therewith.

Whilst consumers express a preference for foods which are considered as healthy and which can assist them to achieve their weight loss goals they show little inclination to sacrifice the organoleptic properties of their favorite foods.

Therefore, the successful food formulator must improve the nutrient value of the food while maintaining desirable organoleptic properties and stability. In particular the appearance and/or texture of such foods may deteriorate upon storage as may the physical stability of the product and/or of one or more of its ingredients.

US 6,245,803 (Abbott Labs) discloses an elemental nutritional formula that claims to be nutritionally complete for humans with specialised dietary needs. The formula uses specific free amino acids (L-asparagine monohydrochloride and L-glutamine) and has 38 to 50% of the calories in the formula provided by fat. The formula may comprise esterified glycerol emulsifiers.

US 6,248,375 (Abbott Labs) discloses solid matrix materials designed for the person with diabetes. It includes a two component carbohydrate system which is said to blunt the postprandial carbohydrate response. One of the forms for administration mentioned is nutritional bars. In the examples nutritional bars are disclosed comprising about 15 or 16 % by weight of soy protein, about 4.6% by weight of glycerin and a vitamin and mineral pre-mix comprising zinc, iron and copper.

EP-A-626,177 (Abbot Labs) discloses beverage nutritional compositions intended for persons infected with human immunodeficiency virus. The beverage comprise oil, soy protein hydrolysate and as an emulsifier diacetyl tartaric acid esters of mono and diglycerides.

WO 94/15486 (Danish Crown Inc.) discloses emulsified food products comprising propylene glycol alginate.

JP 56065622 (San-EI Chem Ind. Ltd.) discloses a foaming agent comprising mainly albumin and optionally natural or synthetic pastes which may include propylene glycol alginate.

However, despite the above developments, there still remains a need in the art to provide a solution to the problems mentioned hereinabove.

Recognising the demand for effective and convenient food products that maintain good organoleptic properties and stability when certain micronutrients (especially transition metals or their compounds) are incorporated therein, research has been carried out to try to address one or more of the problems associated therewith.

In particular, there is a still a need for edible compositions comprising transition metals, divalent metals and/or their compounds at nutritionally advantageous levels, but which are of acceptable organoleptic properties for the consumer. In particular, there is a need for such edible compositions which maintain good taste (e.g. do not develop off-flavours), mouthfeel or texture upon storage and/or when made by a process including a heat treatment step.

There is also still a need for edible compositions comprising transition metals, divalent metals and/or their compounds at nutritionally advantageous levels and which are convenient and/or economical to manufacture but which exhibit good stability of the product and/or its ingredients during manufacture and storage. There is particularly a need for such compositions which exhibit good physical stability in terms of colour stability and/or good chemical stability of ingredients (e.g. resistance to oxidation).

There is also still a need for edible compositions comprising transition metals and/or their compounds at nutritionally advantageous levels and which exhibit one or more of the above organoleptic properties and stability upon storage, especially upon prolonged storage at elevated temperatures (e.g. 30°C for 4 weeks), or, when the edible composition is subjected to a heat treatment step during preparation (e.g. a pasturisation or other sterilisation step) which may be used to prepare an ambient stable food product.

All of the above is especially applicable to meal replacement products or other calorie-controlled products intended to be consumed as part of a weight loss or weight control plan.

The present invention seeks to address one or more of the above-mentioned problems.

### Summary of the Invention

Surprisingly it has been found that one or more of the above problems can be ameliorated when an edible composition comprising a controlled level of fat and at least one transition metal, divalent metal or compound thereof, and further comprises a certain type of emulsifier.

Thus according to a first aspect the present invention provides an edible composition comprising fat and:
1) at least one transition metal, divalent metal, transition metal compound or divalent metal compound, and
2) 0.01 to 50 %wt based on the weight of the fat, of emulsifier comprising a carboxylic ester group attached to a carbon chain having 3-6 carbon atoms and one or more free hydroxyl groups, wherein the emulsifier compound comprises a mixture of esterified glycerol emulsifiers and esterified alginates,
and further wherein 30% or less of the kilocalories in the edible composition are provided from the fat.

It is also especially preferred that the edible compositions comprises a mixture of esterified glycerol emulsifiers and/or esterified alginates with at least one stabiliser and/or at least one thickener.

Preferably the stabiliser is a pectin. Preferably the thickener is selected from starches or gum. It is most preferred that both a stabiliser and a thickener is used and that the stabiliser is pectin and the thickener is a gum such as guar gum.

The edible compositions do not to suffer unacceptably from a deterioration in taste, texture or mouthfeel upon storage. The edible compositions also do not to suffer unacceptably from a deterioration in stability upon storage, especially not in colour stability and/or chemical stability of the products or its ingredients.

It is preferred that the edible compositions of the invention do not suffer from the aforementioned problems for at least 4 months upon storage at 20°C, more preferably at least 6 months.

Without wishing to be bound by theory, it is believed that emulsifiers retard the detrimental action of the transition metal ions and/or divalent metal ions upon the fats present in the edible composition, probably by providing an effective barrier between them and the fat. This may occur by crystalisation at the fat surface, e.g oil droplet surface, thereby forming a tightly packed physical barrier. Alternatively or additionally the claimed emulsifiers may exhibit a metal chelating effect. Some of the claimed emulsifiers may interact with any protein present in the edible compositions to provide a further physical barrier between the transition and/or divalent metal ion and the fat, where the protein is present at the oil/water interface. This also has the additional advantage of aiding the physical stability of the food product by reducing the possibility of protein aggregation therein.

The term "comprising" is meant not to be limiting to any subsequently stated elements but rather to encompass non-specified elements of major or minor functional importance. In other words the listed steps, elements or options need not be exhaustive. Whenever the words "including" or "having" are used, these terms are meant to be equivalent to "comprising" as defined above.

Except in the operating and comparative examples, or where otherwise explicitly indicated, all numbers in this description indicating amounts of material or conditions of reaction, physical properties of materials and/or use are to be understood as modified by the word "about". All amounts are by weight, based on the total weight of the relevant product, unless otherwise specified.

Unless stated otherwise or required by context, the terms "fat" and "oil" are used interchangeably herein. Also, unless stated otherwise or required by context, the terms "nutritional bar(s)" and "nutrition bar(s)" are used interchangeably herein.

For a more complete explanation of the above and other features and advantages of the invention, reference should be made to the following description of the preferred embodiments. The preferred embodiments apply to all aspects of the invention and can be used as appropriate for each aspect.

### Detailed Description of the Invention

### Fat

The source for the fat used in the edible composition may be an animal or vegetable fat, or mixtures thereof. Monosaturated and/or polyunsaturated fats and mixtures thereof are especially preferred. Preferred polyunsaturated fats include omega-3 oils such as fish oils and linseed oils. Preferred omega-3 fatty acids are the following C18:3, C18:4, C20:4, C20:5, C22:5 and C22:6. Any oil comprising omega 3 fatty acids, especially docosahexaenoic acid (DHA, C20:5) and/or eicosapentaenoic acid (EPA, C22:5) may be used.

Preferably the fat is selected from vegetable fats, such as for example; cocoa butter, illipe, shea, palm, palm kernal, sal, soybean, safflower, cottonseed, coconut, rapeseed, canola, corn and sunflower oils, linoleic acids and conjugated linoleic acids, linolenic acid or mixtures thereof. However, animal fats such as butter fat may also be used if consistent with the desired nutritional profile of the product.

According to the present invention, 30% or less of the kilocalories in the edible composition are provided from the fat. It is preferred that 25% or less of the kilocalories in the edible composition are provided from the fat, more preferably 20% or less.

Preferably the amount of fat in the edible composition is not more than 45 wt%, especially not more than 35 wt%, preferably from 0.5 to 20 wt%, still preferably from 1 to 15 wt%, based on the weight of the edible composition and subject to the requirements of the present invention regarding the percentage of calories that come from the fat.

### Transition metals and transitional metal compounds

According to the invention the edible composition comprises at least one transition metal or transition metal compound.

The transition metal is preferably selected from chromium, manganese, iron, cobalt, nickel, copper and zinc and mixtures thereof and the transition metal compounds are preferably compounds of these transition metals. It has been found that iron, cobalt, nickel, copper and zinc can cause particular taste and sensorial problems in edible compositions.

The edible compositions typically comprise up to 100%, typically up to 55%, preferably 30 to 50%, most preferably 35 to 45%, per serving of the composition of a given metal, based on the amounts given in the European Commission Directive 96/8/EC of 26 February 1996 on foods intended for use in energy-restricted diets for weight reduction. The exact amount of the transition metal and/or transition metal compound will depend upon the type used and how frequently that type of edible composition is intended to be consumed.

The amounts given in the aforementioned directive are; 1 mg of manganese, 1.1 mg of copper, 9.5 mg of zinc and 16 mg of iron.

The edible composition preferably comprises one or more of up to 0.5 mg of manganese, up to 0.4 mg of copper, up to 3 mg of zinc or up to 5 mg of iron and mixtures thereof per serving thereof.

The at least one transition metal or transition metal compound may be in a substantially water insoluble form at 20°C and this is preferred according to the invention. The transition metal or transition metal compound may be provided in the substantially water insoluble form by any suitable means. It is preferred that either a substantially water insoluble salt is used, or, that a suitable encapsulant is used to achieve the desired level of water insolubility.

It is advisable to ensure that the transition metal or transition metal compound is in a substantially water insoluble form at all processing temperatures to which the edible composition is subjected during its preparation and ideally also at 5°C or more above the maximum temperature reached.

Any substantially water insoluble compound of a transition metal may be used according to the invention, especially substantially water insoluble inorganic compounds. Such compounds selected from oxides, carbonates and phosphates including pyrophosphates are preferred. If copper is used then copper carbonate is preferred. If iron is used then ferric pyrophosphate is preferred. If zinc is used then zinc oxide is preferred.

Alternatively, or additionally, the transition metal or transition metal compound may be encapsulated to render it substantially water insoluble. This provides a wider choice of the types of transition metal compounds which may be used and may allow for the inclusion of a more bioavailable compound. Any suitable encapsulant may be used. It is especially preferred that an encapsulant is used which does not allow any significant water transmission across the encapsulation layer at temperatures below the melting point of the encapsulant. This is especially important where the encapsulated transition metal or transition metal compound is subjected to elevated temperatures, e.g. of 60°C or more during the preparation of the edible composition.

The term "encapsulated" refers both to an embodiment wherein a coating is substantially formed around the transition metal or transition metal compound and to an embodiment wherein the transition metal or transition metal compound is trapped within or throughout a matrix so that it is rendered substantially water insoluble. The transition metal or transition metal compound preferably has a substantially integral encapsulant coating or matrix around it.

Suitable encapsulant materials include substantially water insoluble edible waxes, proteins, fibres, carbohydrates. The encapsulant material may be cross-linked.

Proteins which may be used as the entire encapsulant material, or as a part thereof, include gelatin, milk proteins (including caseinates, such as sodium caseinate, and whey proteins such as beta-lactoglobulin and alpha lactalbumin), albumin and vegetable proteins including proteins from beans, legumes and cereals such as soy, pea, maize and wheat and isolated soy proteins.

Carbohydrates which may be used as the entire encapsulant material, or as a part thereof, include mono or polysaccharides including, cellulose polymers and starches, (including hydrolysed and modified starches) and sugar alcohols. Suitable materials include gum arabic, carrageenan, agar agar, alginates, pectins and pectates. Preferred encapsulants are carbohydrates such as alginates or pectins, especially including the sodium, potassium and calcium salts of alginates.

Mixtures of sodium caseinate and either gum arabic, carrageenan, agar agar, and gum arabic, are suitable. Similarly, beta-lactoglobulin and either gum arabic, carrageenan, agar agar, alginate or pectins, especially beta-lactoglobulin and gum arabic may be used.

It is preferred that the weight ratio of the transition metal and/or transition metal compound to the encapsulant is in the range of from 5:1 to 1:15, preferably 1:2 to 1:12, e.g. 1:5 to 1:10.

The transition metal or transition metal compound may be encapsulated by any suitable encapsulation technique as known in the art, such as coacervation or spraying on, and does not require further explanation here.

By the term "substantially water insoluble" is meant that the transition metal or transition metal compound does not substantially dissolve in water, in particular that it has a solubility in water at 20°C of 1g/100g deionised water or less, preferably 0.5g/100g deionised water or less.

The present invention also provides a method of stabilising edible compositions comprising at least one divalent metal or divalent metal compound by the use of the same emulsifier compound in the same amounts and having the same features as for the transition metals, as these compositions may suffer from the same problems as compositions comprising transition metals. The divalent metals and/or divalent metal compounds may be present in the amounts given herein for the transition metal ions and their compounds. All of the comments given above for transition metals and their compounds apply equally to divalent metal ions and their compounds.

### Emulsifier compound

The edible compositions comprise an amount of from 0.01 to 50 %wt based on the weight of the fat in the composition, of emulsifier comprising a carboxylic ester group attached to a carbon chain having 3-6 carbon atoms and one or more free hydroxyl groups and wherein the emulsifier comprises a mixture of esterified glycerol emulsifiers and esterified alginates.

Preferably the compositions comprise 5 to 45%wt based on the weight of the fat in the composition of said emulsifier compound, more preferably 10 to 40%wt, such as 15 to 35%wt.

Preferably the carboxylic ester group is attached to a carbon chain having 3 or 4 carbon atoms and one or more free hydroxyl groups.

The emulsifier compounds preferably have a degree of esterification of 50 to 100%, more preferably of 55 to 95%.

One type of preferred emulsifier compound according to the invention is an ester of a C12-C20, preferably a C16 to C20, carbon chain fatty acid and a polyhydric alcohol, preferably glycerol and propylene oxide. Fatty acid esters of glycerol, polyglycerol esters of fatty acids, and polyoxyethylene and polyoxypropylene esters of fatty acids may be used. Mono- and di-glycerides are preferred.

Preferred esters of fatty acids and polyhydric alcohols are esterified glycerol emulsifiers having a fatty acid chain length of from C12-C20.

An especially preferred emulsifier compound is diacetyl tartaric acid esterified with (vegetable) mono/di glycerides.

Propylene glycol alginates are especially preferred esterified alginates. Alginates are naturally derived co-polymers of mannuronic and guluronic acids and are hydrocolloids extracted from seaweeds.

It is preferred that the propylene glycol alginates have a weight average molecular weight in the range of from 30,000 to 300,000, more preferably from 40,000 to 250,000. It is also preferred that the degree of esterification is preferably in the range of from 50-95%, more preferably 75-90%, such as 80-90%.

An especially preferred mixture of emulsifiers according to the present invention is diacetyl tartaric acid esterified with mono/di glycerides and propylene glycol alginates, especially when used in a weight ratio of from 1:5 to 5:1, most especially 1:2 to 2:1, such as 1:1.

### Stabiliser

It is preferred that the edible composition further comprises at least one stabiliser compound. Any suitable stabiliser may be used although pectins are preferred. The pectin may be any suitable pectin. For some applications, methoxylated pectins are preferred, especially those having a degree of methoxylation of 50% or greater, more preferably 60% or greater, such as 70% or greater.

When present, the total amount of stabiliser in the edible composition is preferably from 0.1 to 5%wt based on the edible composition, more preferably 0.15 to 3%wt, such as 0.2 to 2%wt.

### Thickener

It is preferred that the edible composition further comprises at least one thickener compound. Any suitable stabiliser may be used although gums and starches are preferred.

It is preferred that the edible compositions comprise at least one stabiliser and at least one thickener.

Any suitable gum may be used and preferred gums include carrageenan, guar gum, xanthan gum, locust bean gum, tara gum, acacia gum and gum tragacanth. Any suitable starch may be used and preferred starches are modified starches. Suitable starches include those obtained from corn, potatoe, maize (especially waxy maize), tapioca, rice or wheat.

When present, the total amount of thickener in the edible composition is preferably from 0.01 to 3%wt based on the weight of the edible composition, preferably 0.02 to 1.5%wt, such as 0.03 to 1%wt.

According to a particularly preferred aspect of the present invention a mixture of diacetyl tartaric acid esterified with mono/di glycerides and/or propylene glycol alginate with pectin and/or guar gum is used in the edible compositions.

It is also possible to use carbomymethylcellulose in the compositions as a thickener, although in many cases this is not preferred.

### Types of edible composition

The edible composition may be of any type. Preferred are edible compositions which are intended to be used as part of a weight loss or weight control plan. It is especially preferred that the edible composition is stable at ambient temperatures.

Preferred types of the edible compositions include beverages, nutrition bars, desserts including ice cream, mousses, soups, soluble powdered products including those for preparing a beverage and cereal or rice based products including pasta and noodle based products. Such products may be of the meal replacer type.

It has been found that edible compositions having a pH at 20°C in the range of from 3 to 7 are especially prone to one or more of the above mentioned problems and thus these are especially preferred according to the invention. This even more apparent for edible compositions which have at least some liquid properties. Such products include beverages, such as dairy or soy based beverages, and desserts which are capable of flowing such as mousses, custard-type desserts, yogurts and ice-creams (when at least partially thawed ready for eating) etc.

According to one particular aspect of the present invention, beverages having a pH at 20°C in the range of from 3 to 7 are especially preferred as the aforementioned problems have been found to be especially apparent therein. Such beverages may be based upon any dairy derived protein or protein source with yoghurt or soy based beverages having a pH at 20°C in the range of from 3 to 7 being especially preferred, more preferably 3 to 5, such as 3.5 to 5.5.

A serving size as referred to herein refers to the amount of the edible composition that is intended to be consumed as a single portion, typically in a single sitting.

The size of a serving of the edible composition will depend upon the type of composition. For beverages, the typical serving size is in the range of from 100 to 500 ml, preferably 200 to 400m1, such as 250 to 350ml. For a bar product the typical serving size is in the range of from 20 to 100 g, preferably of from 45g to 70g, especially 50g to 65g, such as 55g to 60g. However, it will be understood that the serving size will vary according to the type of edible composition.

The edible compositions preferably have a calorie content in the range of from 30 kilocalories (kcals) to 500 kcals, more preferably 75 kcals to 450 kcals, most preferably 100 kcals to 400 Kcals per serving where the compositions are intended to replace an entire meal. If the edible composition is a snack product and several snack products can be eaten to replace a meal, or the product is intended to be eaten between meals, the calorie content may be lower than 200 kcals per serving. However, it will be understood that the calorie content per serving will vary according to the type of edible composition.

### Protein

The edible composition preferably further comprises protein. Preferred sources for the protein which may be used in the present invention include dairy protein sources such as whole milk, skim milk, condensed milk, evaporated milk, milk solids non-fat, and mixtures thereof and includes whey protein such as whey protein isolate and whey protein concentrate and caseins; vegetable protein sources such as soy, wheat, rice or pea and mixtures thereof; and animal sources of protein including gelatin. Soy and dairy proteins are especially preferred.

Especially preferred, to minimize the caloric impact, is the addition of protein as such rather than as one component of a food ingredient such as whole milk. Preferred in this respect are protein concentrates such as one or more of whey protein concentrate, milk protein concentrate, caseinates such as sodium and/or calcium caseinate and soy protein concentrates The protein may be present as the isolated protein, as a protein concentrate or as a protein hydrolysate.

The protein may be included in any suitable physical form, depending upon the type of edible composition, including as a powder or as nuggets. Powder sources are typically most suitable for beverages and soups etc and such edible compositions whilst protein nuggets may find particular application in substantially solid products such as bars and pastas.

It is preferred that at least 15% of the kilocalories in the edible composition are provided by the protein, more preferably 20 to 80%, most preferred 25 to 70%, such as 30 to 60%.

It is preferred according to the present invention that the weight ratio of the protein to emulsifier is in the range of from 50:1 to 10:1, more preferably 30:1 to 10:1, most preferably 25:1 to 15:1.

### Carbohydrate

The edible composition preferably further comprises carbohydrate.

Any suitable carbohydrates may be included in the edible compositions. Suitable examples include starches such as those contained in rice flour, flour, tapioca flour, tapioca starch, and whole wheat flour and mixtures thereof.

Generally the edible compositions will be naturally sweetened and this provides a source of carbohydrate. Natural sources of sweetness include sucrose (liquid or solids), glucose, fructose, and corn syrup (liquid or solids), including high fructose corn syrup and high maltose corn syrup and mixtures thereof. Other sweeteners include lactose, maltose, glycerine, brown sugar and galactose and mixtures thereof. Levels of sugars and sugar sources preferably result in sugar solids levels of up to 40wt%, preferably from 5 to 20 wt%. The artificial sweeteners mentioned below as optional ingredients may also be used.

The carbohydrate in the edible composition may also comprise a fibre sources. Suitable fibre sources which may be included in the edible compositions of the invention include fructose oligosaccharides such as inulin, soy fiber, fruit fibre e.g. apple, oat fiber, cellulose and mixtures thereof. The compositions preferably contain at least 2 to 10g of fibre per serving, more preferably 3 to 7g, most preferably 4 to 6g.

The total amount of carbohydrate in the edible compositions (including any carbohydrate present as the encapsulant of the transition metal or transition metal ion) is preferably within the range of from 2wt% to 60 wt%, especially from 5%wt to 40%wt.

### Optional ingredients

If it is desired to include in the edible compositions a bulking agent inert polydextrose is preferred. Polydextrose may be obtained under the brand name Litesse. Other conventional bulking agents which may be used alone or in combination therewith include maltodextrin, sugar alcohols, corn syrup solids, sugars or starches and mixtures thereof may also be used. Total bulking agent levels in the edible compositions are preferably of from 0% to 20 wt%, preferably 1% to 15wt%.

Flavorings are preferably added to the edible compositions in amounts that will impart a mild, pleasant flavor. The flavoring may be any of the commercial flavors typically employed. Flavorings which mask off-tastes from vitamins and/or minerals and other ingredients are preferably included in the edible compositions.

The edible compositions may comprise one or more conventional colourants, in conventional amounts as desired. One advantage of the present invention is that the edible compositions comprising a colourant maintain good colour stability on storage.

The edible compositions may comprise one or more cholesterol lowering agents in conventional amounts. Any suitable, known, cholesterol lowering agent may be used, for example isoflavones, phytosterols, soy bean extracts, fish oil extracts, tea leaf extracts.

The edible compositions may optionally comprise, in suitable amounts, one or more agents which may beneficially influence (post-prandial) energy metabolism and substrate utilisation, for example caffeine, flavonoids (including tea catechins, capsaicinoids and canitine).

If it is desired to use artificial sweeteners, any of the artificial sweeteners well known in the art may be used, such as aspartame, saccharine, Alitame® (obtainable from Pfizer), acesulfame K (obtainable from Hoechst), cyclamates, neotame, sucralose, mixtures thereof and the like. The sweeteners may used in varying amounts of from 0.005% to 1wt% of the edible composition, preferably 0.007%wt to 0.73%wt depending on the sweetener. For example, Aspartame may be used at a level of 0.05%wt to 0.15%wt, preferably at a level of 0.07%wt to 0.11%wt. Acesulfame K is preferred at a level of 0.09%wt to 0.15%wt.

In a preferred embodiment, the product is fortified with one or more vitamins and/or minerals in addition to the transition metals and the alkaline earth metal source. These may include any or all of the following:
Ascorbic acid (Vitamin C), Tocopheryl Acetate (Vitamin E), Biotin (Vitamin H), Vitamin A Palmitate, Niacinamide (Vitamin B3), d-Calcium Pantothenate (Vitamin B5), Cyanocobalamin (Vitamin B12), Riboflavin (Vitamin B2), Thiamine Mononitrate (Vitamin B1), Molybdenum, Selenium, Calcium Carbonate, Calcium Lactate or Magnesium (e.g. magnesium phosphate).

One or more of these vitamins and minerals are preferably present in amounts of from up to 100%, typically up to 55%, preferably 30 to 50%, most preferably 35 to 45%, per serving of the composition, of the amounts given in the above European Commission Directive 96/8/EC of 26 February 1996.

It is preferred that the edible composition comprises Vitamin C especially in amounts of from 10 to 100 mg per serving.

In particular the edible compositions may comprise alkaline metals such as sodium and/or potassium.

If a divalent metal is present in the composition, it is preferably magnesium and/or calcium. Calcium is preferably present in the edible compositions in the in an amount of from up to 100%, typically up to 55%, preferably 30 to 50%, most preferably 35 to 45%, per serving of the composition, of the amount given in the above European Commission Directive 96/8/EC of 26 February 1996 (700mg). Any suitable edible calcium source may be used.

It is preferred that the edible compositions comprise potassium, especially in an amount of at least 300 mg of potassium per serving of the edible composition, more preferably 400-1000, most preferably 450-700mg. Any suitable edible potassium source may be used.

The type of edible composition will of course dictate the type and amount of optional ingredients used.

### Manufacture of edible composition

The edible compositions of the invention may be produced by any suitable known method.

If the edible composition is a bar or other substantially solid product, it may be fully or partially coated, e.g. with milk chocolate or yogurt flavored coating. Alternatively, a savoury coating may be used. Suitable conventional coating methods may be used.

### Weight loss plan

The edible composition is preferably one intended to be used as part of a weight loss or weight control plan.

A meal replacement product as referred to herein refers to a product which is intended to replace one or more conventional meals per day; they are of a controlled calorie content and are generally eaten as a single product. Examples of meal replacement products include; liquid products such as milk or soya-based drinks, soluble powders used to prepare those drinks and drinks prepared therefrom, bars, soups, cereal or noodle or pasta-based products, desserts such as rice puddings, custards and the like. Meal replacement products are generally used by consumers following a calorie controlled diet. The edible compositions of the invention may be consumed as meal replacement products.

The invention will be further illustrated by reference to the following examples. Further examples within the scope of the invention will be apparent to the person skilled in the art.

### Examples

The following yoghurt based beverages were prepared as given in Table 1 and described below. All amounts are as percentages by weight based on the weight of the composition.

**Table 1**

| | Ex 1 | Control |
|---|---|---|
| Yoghurt | 50.0 | 50.0 |
| Pectin*¹ | 0.45 | 0.45 |
| Guar gum*² | 0.05 | 0.06 |
| Propylene glycol alginate*³ | 0.12 | - |
| Diacetyl tartaric ester of vegetable mono/di glycerides*⁴ | 0.10 | - |
| Sucrose | 4.38 | 2.67 |
| Maize oil | 0.57 | 0.57 |
| Whey protein concentrated powder | 2.90 | 2.90 |
| Fructose | 1.0 | 1.0 |
| Gum arabic | 0.7 | 0.7 |
| Inulin fibre | 0.25 | 0.25 |
| Food colours/flavours | 0.97 | 1.92 |
| Vitamin and mineral premix* ⁵ | 0.10 | 0.10 |
| Lactic acid solution | 0.30 | 0.30 |
| Sodium ascorbate | 0.03 | - |
| Water | To 100%wt | To 100%wt |

| | | |
|---|---|---|
| *¹ AMD 782 high ester pectin available from Davisco *² Guar gum 1400/178 available from Danisco *³ GP 7530 available from FMC *⁴ Datum Admul emulsifier 1935, available from Quest *⁵ comprising copper in amounts of up to 4 mg, zinc in amounts of up to 3mg and iron in amounts of up to 5mg per 300ml serving of the composition and also comprising calcium. | | |

The control formulation was prepared by mixing the pectin, guar gum and 0.06%wt (based on the weight of the beverage) of the sucrose in a part of the water at about 80°C until a slurry was formed. The slurry was cooled and mixed with the yoghurt. The maize oil, whey protein powder, fructose, gum arabic and inulin were added with mixing. The food colours and flavours and remaining sucrose and water were added and the resultant mixture was mixed for about 15 minutes. The vitamin and mineral premix was added and the pH was adjusted to 4.1 with the lactic acid solution. The beverage was mixed for a further 15 minutes and was then pasteurised.

Example 1 was prepared by mixing the pectin, guar gum, propylene glycol alginate and 1.24%wt of the sucrose (based on the weight of the beverage) in a part of the water at about 90°C until a slurry was formed. The slurry was cooled to about 5°C and mixed with the yoghurt. The remaining ingredients were added as for the control example with the diacetyl tartaric ester of vegetable mono/diglycerides also being added. The pH was adjusted to 4.0 with the lactic acid solution.

Samples of the two formulations were stored at 30°C and 20°C to assess stability upon storage. The results are given in tables 2 and 3 and are assessed on a scale of 1-10 (with 10 being the highest score) unless otherwise stated. The stability was assessed in terms of appearance, aroma, mouthfeel, flavour stability, resistance to sedimentation, viscosity stability and overall acceptability upon storage. Changes in pH upon storage were also noted.

**Table 2; 30°C storage results**

| Week | 0 | 2 | 4 | 6 | 8 | 10 | 12 |
|---|---|---|---|---|---|---|---|
| **Appearance** P=pink B=brown | | | | | | | |
| Control | P | Darker | S1. B | B | V. B | V. B | V. B |
| Ex 1 | P | S1. less P | Less P | S1. B | S1. B | S1. B | B |

| **Aroma; Fruit/ yoghurt/ offnotes.** | | | | | | | |
|---|---|---|---|---|---|---|---|
| Control | 7/6/0 | 5/4/0 | 4.5/4/ 0 | 3/3/0.8 | 2/2/1 | 0.5/2/ 1.5 | 0.5/ 1.5/ 1.5 |
| Ex 1 | 7/6/0 | 7/6/0 | 7/6/0 | 7/6/0 | 7/6/0 | 7/6/0 | 7/6/0 |

| **Mouthfeel; creamy/ smoothness** | | | | | | | |
|---|---|---|---|---|---|---|---|
| Control | 7/6 | 7/6 | 7/6 | 7/6 | 7/6 | 7/6 | 7/6 |
| Ex 1 | 7/7 | 7/7 | 7/7 | 7/7 | 7/7 | 7/7 | 7/7 |

| **Flavour; Fruit/ yoghurt** | | | | | | | |
|---|---|---|---|---|---|---|---|
| Control | 8/7 | 6/5 | 6/5 | 4.5/4 | 3/2 | 2.5/2 | 2/2 |
| Ex 1 | 8/7 | 8/7 | 7.5/7 | 7.5/7 | 7.5/7 | 6.5/ 6.8 | 6.5/ 6.8 |

| **Off flavour; cooked/ cardboard/ oxidised** | | | | | | | |
|---|---|---|---|---|---|---|---|
| Control | 0/0/0 | 0.5/0/0 | 1/0.5/ 0 | 1/0.8/0 | 1.5/1/ 0.5 | 1.5/ 1.5/0 | 1.5/2/0 |
| Ex 1 | 0/0/0 | 0/0/0/ | 0/0/0 | 0/0/0 | 0/0/0 | 0/0/0 | 0/0/0 |

| **pH;** | | | | | | | |
|---|---|---|---|---|---|---|---|
| Control | 4.1 | 4.1 | 4.1 | 4.1 | 4.2 | 4.2 | 4.2 |
| Ex 1 | 4.0 | 4.1 | 4.0 | 4.0 | 4.0 | 4.0 | 3.9 |

| **Sedimentation (g); per approx 300ml** | | | | | | | |
|---|---|---|---|---|---|---|---|
| Control | 0 | 0.3 | 0.5 | 0.6 | 0.9 | - | 1.0 |
| Ex 1 | 0 | 0 | 0 | 0 | 0 | 0 | 0 |

| **Viscosity (cP);** | | | | | | | |
|---|---|---|---|---|---|---|---|
| Control | 45 | 30 | 30 | 35 | 36.5 | 36.5 | 30 |
| Ex 1 | 73 | 59.5 | 69.5 | 69.5 | - | - | - |

| **Overall acceptability; (0-5)** | | | | | | | |
|---|---|---|---|---|---|---|---|
| Control | 5 | 4 | 3.5 | 2.5 | 1 | 0.5 | 0 |
| Ex 1 | 5 | 4.8 | 4.5 | 4 | 3 | 2 | 1.5 |

The above results demonstrate that the beverages according to the invention show better stability upon storage at 30°C in terms of the above characteristics than did the control formulation.

**Table 3; 20°C storage results**

| Week | 0 | 4 | 8 | 12 |
|---|---|---|---|---|
| **Appearance** P=pink | | | | |
| Control | Good | Good | S1 darkening | Significant darkening |
| Ex 1 | Good | Good | S1 less P | S1 less P |

| **Aroma; Fruit/yoghurt /offnote old oil/ offnote cardboard.** | | | | |
|---|---|---|---|---|
| Control | 7/6/0/0 | 7/6/0/0 | 7/6/0/0 | 6/5/1/1 |
| Ex 1 | 8/7/0/0 | 8/7/0/0 | 8/7/0/0 | 8/7/0/0 |

| **Mouthfeel; creamy/ smoothness** | | | | |
|---|---|---|---|---|
| Control | 7/6 | 7/6 | 7/6 | 7/6 |
| Ex 1 | 7/7 | 7/7 | 7/7 | 7/7 |

| **Flavour; Fruit/ yoghurt** | | | | |
|---|---|---|---|---|
| Control | 8/7 | 8/7 | 7.8/6.8 | 5.8/6 |
| Ex 1 | 8/7 | 8/7 | 7.5/6.8 | 7.5/6.8 |

| **Off flavour; Old oil/ cardboard/ oxidised** | | | | |
|---|---|---|---|---|
| Control | 0/0/0 | 0/0/0 | 0/0/0 | 0.5/0/0 |
| Ex 1 | 0/0/0 | 0/0/0 | 0/0/0 | 0/0/0 |
| **pH;** | | | | |
| Control | 4.1 | 4.1 | 4.2 | 4.1 |
| Ex 1 | 4.1 | 4.1 | 4.0 | 4.0 |

| **Sedimentation (g); per approx 300ml** | | | | |
|---|---|---|---|---|
| Control | 0 | 0 | 1 | 1 |
| Ex 1 | 0 | 0 | 0 | 0 |
| **Viscosity (cP);** | | | | |
| Control | 45 | 45 | 43.5 | 45 |
| Ex 1 | 80 | 80 | 66.5 | 60.1 |

| **Overall acceptability; (0-5)** | | | | |
|---|---|---|---|---|
| Control | 5 | 5 | 4.8 | 4 |
| Ex 1 | 5 | 5 | 4.6 | 4.6 |

The above results demonstrate that the beverages according to the invention show better stability upon storage at 20°C in terms of the above characteristics than did the control formulation.

## Claims

1. An edible composition comprising fat and:
1) at least one transition metal, divalent metal, transition metal compound or divalent metal compound, and
2) 0.01 to 50 %wt based on the weight of the fat, of emulsifier comprising a carboxylic ester group attached to a carbon chain having 3-6 carbon atoms and one or more free hydroxyl groups, wherein the emulsifier comprises a mixture of esterified glycerol emulsifiers and esterified alginates, and further wherein 30% or less of the kilocalories in the edible composition are provided from the fat.

2. An edible composition according to claim 1, wherein the edible composition comprises of from 5 to 45%wt, based on the weight of the fat, of the emulsifier.

3. An edible composition according to either one of claims 1 or 2, wherein the esterified glycerol emulsifier comprises diacetyl tartaric acid esterified with mono or di glycerides.

4. An edible composition according to either one of claims 1 or 2, wherein the esterified alginate comprises propylene glycol alginates.

5. An edible composition according to any one of the preceding claims, wherein the edible composition further comprises at least one stabiliser and/or thickener.

6. An edible composition according to claim 5, wherein the stabiliser is present in an amount of from 0.1 to 5%wt and/or the thickener is present in an amount of from 0.01 to 3%wt based on the weight of the edible composition.

7. An edible composition according to either one of claims 5 or 6, wherein the stabiliser is a pectin and/or the thickener is selected from gums and starches.

8. An edible composition according to any one of the preceding claims, wherein the at least one transition metal or transition metal compound is selected from chromium, manganese, iron, cobalt, nickel, copper or zinc and mixtures thereof.

9. An edible composition according to claim 8, wherein the edible composition comprises one or more of up to 0.5 mg of manganese, up to 0.4 mg of copper, up to 3 mg of zinc or up to 5 mg of iron and mixtures thereof per serving of the edible composition.

10. An edible composition according to any one of the preceding claims, wherein the edible composition further comprises protein.

11. An edible composition according to claim 10, wherein the weight ratio of the protein to emulsifier is in the range of from about 50:1 to about 10:1.

12. An edible composition according to any one of the preceding claims, wherein the edible composition is stable at ambient temperatures.

13. An edible composition according to any one of the preceding claims, wherein the edible composition has a pH at 20°C of from 3 to 7.

14. An edible composition according to claim 13, wherein the edible composition is a dairy or soy based beverage.

15. An edible composition according to any one claims 1 to 12, wherein the edible composition is a beverage, nutrition bar, a dessert, a soup, a soluble powdered product or a cereal or rice based product.

## Patentansprüche

1. Essbare Zusammensetzung, umfassend Fett und:
1) mindestens ein Übergangsmetall, bivalentes Metall, eine Übergangsmetallverbindung oder bivalente Metallverbindung und
2) 0,01 bis 50 Gew.-%, basierend auf dem Gewicht des Fetts, an Emulgator, umfassend eine Karbonsäureestergruppe, gebunden an eine Kohlenstoffkette mit 3-6 Kohlenstoffatomen und eine oder mehreren freien Hydroxylgruppen, worin der Emulgator ein Gemisch aus veresterten Glycerolemulgatoren und veresterten Alginaten umfasst, und worin ferner 30% oder weniger der Kilokalorien in der essbaren Zusammensetzung vom Fett vorgesehen werden.

2. Essbare Zusammensetzung gemäß Anspruch 1, worin die essbare Zusammensetzung von 5 bis 45 Gew.-%, basierend auf dem Gewicht des Fetts, des Emulgators umfasst.

3. Essbare Zusammensetzung gemäß einem der Ansprüche 1 oder 2, worin der veresterte Glycerolemulgator Diacetylweinsäure, verestert mit Mono- oder Diglyceriden umfasst.

4. Essbare Zusammensetzung gemäß einem der Ansprüche 1 oder 2, worin das veresterte Alginat Propylenglycolalginate umfasst.

5. Essbare Zusammensetzung gemäß einem der vorhergehenden Ansprüche, worin die essbare Zusammensetzung ferner mindestens einen Stabilisator und/oder Verdickungsmittel umfasst.

6. Essbare Zusammensetzung gemäß Anspruch 5, worin der Stabilisator in einer Menge von 0,1 bis 5 Gew.-% vorhanden ist und/oder das Verdickungsmittel in einer Menge von 0,01 bis 3 Gew.-% vorhanden ist, basierend auf dem Gewicht der essbaren Zusammensetzung.

7. Essbare Zusammensetzung gemäß einem der Ansprüche 5 oder 6, worin der Stabilisator ein Pektin ist und/oder das Verdickungsmittel ausgewählt wird aus Gummis und Stärken.

8. Essbare Zusammensetzung gemäß einem der vorhergehenden Ansprüche, worin mindestens ein Übergangsmetall oder eine Übergangsmetallverbindung ausgewählt wird aus Chrom, Mangan, Eisen, Cobalt, Nickel, Kupfer oder Zink und Gemischen daraus.

9. Essbare Zusammensetzung gemäß Anspruch 8, worin die essbare Zusammensetzung ein oder mehrere von bis zu 0,5 mg Mangan, bis zu 0,4 mg Kupfer, bis zu 3 mg Zink oder bis zu 5 mg Eisen und Gemische daraus pro Portion der essbaren Zusammensetzung umfasst.

10. Essbare Zusammensetzung gemäß einem der vorhergehenden Ansprüche, worin die essbare Zusammensetzung ferner Protein umfasst.

11. Essbare Zusammensetzung gemäß Anspruch 10, worin das Gewichtsverhältnis des Proteins zum Emulgator im Bereich von etwa 50:1 bis etwa 10:1 ist.

12. Essbare Zusammensetzung gemäß einem der vorhergehenden Ansprüche, worin die essbare Zusammensetzung bei Umgebungstemperaturen stabil ist.

13. Essbare Zusammensetzung gemäß einem der vorhergehenden Ansprüche, worin die essbare Zusammensetzung einen pH bei 20°C von 3 bis 7 hat.

14. Essbare Zusammensetzung gemäß Anspruch 13, worin die essbare Zusammensetzung ein Molkerei- oder Soja-basiertes Getränk ist.

15. Essbare Zusammensetzung gemäß einem der Ansprüche 1 bis 12, worin die essbare Zusammensetzung ein Getränk, Ernährungsriegel, ein Dessert, eine Suppe, ein lösliches pulverisiertes Produkt oder ein Getreide- oder Reis-basiertes Produkt ist.

## Revendications

1. Composition comestible comprenant des matières grasses et :
1) au moins un métal de transition, métal divalent, composé à base d'un métal de transition ou composé à base d'un métal divalent, et
2) 0,01 à 50 % en poids sur la base du poids des matières grasses, d'émulsifiant comprenant un groupe ester carboxylique attaché à une chaîne de carbone ayant 3 à 6 atomes de carbone et un ou plusieurs groupes hydroxyle libres, dans laquelle l'émulsifiant comprend un mélange d'émulsifiants de glycérol estérifié et des alginates estérifiés, et en outre dans laquelle 30 % ou moins des kilocalories dans la composition comestible proviennent des matières grasses.

2. Composition comestible selon la revendication 1, dans laquelle la composition comestible comprend de 5 à 45 % en poids, sur la base du poids des matières grasses, d'émulsifiant.

3. Composition comestible selon l'une des revendications 1 ou 2, dans laquelle l'émulsifiant de glycérol estérifié comprend de l'acide diacétyl-tartrique estérifié avec des mono ou di-glycérides.

4. Composition comestible selon l'une des revendications 1 ou 2, dans laquelle l'alginate estérifié comprend des alginates de propylèneglycol.

5. Composition comestible selon l'une quelconque des revendications précédentes, dans laquelle la composition comestible comprend en outre au moins un stabilisant et/ou un épaississant.

6. Composition comestible selon la revendication 5, dans laquelle le stabilisant est présent en une quantité de 0,1 à 5 % en poids et/ou l'épaississant est présent en une quantité de 0,01 à 3 % en poids sur la base du poids total de la composition comestible.

7. Composition comestible selon l'une des revendications 5 ou 6, dans laquelle le stabilisant est une pectine et/ou l'épaississant est choisi parmi des gommes et des amidons.

8. Composition comestible selon l'une quelconque des revendications précédentes, dans laquelle le au moins un métal de transition ou composé à base d'un métal de transition est choisi parmi le chrome, le manganèse, le fer, le cobalt, le nickel, le cuivre ou le zinc et des mélanges de ceux-ci.

9. Composition comestible selon la revendication 8, dans laquelle la composition comestible comprend un ou plusieurs parmi le manganèse, jusqu'à 0,5 mg de manganèse, le cuivre, jusqu'à 0,4 mg de cuivre, le zinc, jusqu'à 3 mg de zinc ou le fer, jusqu'à 5 mg de fer et des mélanges de ceux-ci par portion de la composition comestible.

10. Composition comestible selon l'une quelconque des revendications précédentes, dans laquelle la composition comestible comprend en outre une protéine.

11. Composition comestible selon la revendication 10, dans laquelle le rapport en poids de la protéine à l'émulsion est dans la gamme d'environ 50:1 à environ 10:1.

12. Composition comestible selon l'une quelconque des revendications précédentes, dans laquelle la composition comestible est stable à des températures ambiantes.

13. Composition comestible selon l'une quelconque des revendications précédentes, dans laquelle la composition comestible a un pH à 20°C de 3 à 7.

14. Composition comestible selon la revendication 13, pour laquelle la composition comestible est une boisson laitière ou à base de soja.

15. Composition comestible selon l'une quelconque des revendications 1 à 12, pour laquelle la composition comestible est une boisson, une barre nutritive, un dessert, une soupe, un produit en poudre soluble ou un produit à base de céréales ou de riz.
